# EUROPÄISCHE PATENTSCHRIFT

(11) **EP 0 422 553 B1**
(45) Veröffentlichungstag und Bekanntmachung des Hinweises auf die Patenterteilung: **04.08.1993**
(21) Anmeldenummer: 90119249.2
(22) Anmeldetag: 08.10.1990
(51) Int. Cl.: G01W 1/14

(54) **Niederschlagsmesser**
Precipitation measuring device
Dispositif de mesure de la précipitation

(30) Priorität: 09.10.1989 LU 87603
(43) Veröffentlichungstag der Anmeldung: 17.04.1991
(73) Patentinhaber: EUROPÄISCHE WIRTSCHAFTSGEMEINSCHAFT (E.W.G.), L-2920 Luxemburg (LU)
(72) Erfinder: Weydert, Marco, L-7619 Larochette (LU); Raes, Frank, I-21014 Laveno Mombello (VA) (IT)
(74) Vertreter: Weinmiller, Jürgen

(56) Entgegenhaltungen:
- DE-A- 2 353 491
- FR-A- 1 231 743
- FR-A- 2 595 473
- US-A- 3 141 330
- US-A- 3 830 103
- PATENT ABSTRACTS OF JAPAN, Band 9, Nr. 157 (P-369)[1880], 2. Juli 1985; & JP-A-60 33 078 (TATEISHI DENKI) 20-02-1985

## Beschreibung

Die Erfindung bezieht sich auf einen Niederschlagsmesser, der nicht nur in der Lage ist, die Gesamtregenmenge zwischen zwei Inspektionszeitpunkten zu erfassen, sondern darüber hinaus automatisch und kontinuierlich Informationen sammelt, aus denen die Intensität des Niederschlags, die Größe der Regentropfen und auch ggfs. Art und Intensität von anderen Niederschlägen erarbeitet werden können, wie z.B. Hagel oder Schneefall.

Die klassische Methode der Regenmessung verwendet Sammelbehälter, die gegen Verdunstung geschützt sind und in bestimmten Zeitabständen zur Messung entleert werden. Solche Regenmesser liefern naturgemäß nur Angaben über die Gesamtmenge der im Beobachtungszeitraum erfolgten Niederschläge, ermittelt als äquivalente Menge Wassers.

Spezielle Wetterradargeräte, die weitergehende Informationen wie etwa die Regenintensität und die genaue Dauer einer Niederschlagsphase ermitteln, sind sehr teuer und können nur in ebenem Gelände verwendet werden.

Es bsteht der Wunsch, einen Niederschlagsmesser anzugeben, der billiger als ein Wetterradar ist und trotzdem sehr detaillierte Informationen über Art, Intensität und Dauer von Niederschlägen liefert.

Aus der Druckschrift Patent Abstracts of Japan Band 9 N° 157 (P-369) [1880] vom 2.7.1985 ist ein Regenmesser gemäß dem Oberbegriff des Anspruchs 1 bekannt, der diese Forderung weitgehend erfüllt. Ein auf eine Prallplatte auftreffender Regentropfen erzeugt ein elektrisches Analogsignal, das dann integriert wird und so die Gesamtregenmenge zu ermitteln erlaubt. Aufgabe der Erfindung ist es demgegenüber, auch Informationen über die Niederschlagsart zu gewinnen. Diese Aufgabe wird durch den im Anspruch 1 gekennzeichneten Niederschlagsmesser gelöst.

Die Erfindung beruht also auf der Beobachtung der akustischen Schwingungen, denen eine Prallplatte unterliegt, auf die einzelne Tropfen auftreffen. Es hat sich überraschend gezeigt, daß diese Beobachtung, die mit den modernen elektronischen Bausteinen preiswert durchgeführt werden kann, zu Informationen führt, die auf die Größe der Tropfen schließen lassen und sogar eine Unterscheidung zwischen den verschiedenen Niederschlagsarten wie Tropfen, Hagelkörner oder Schneeflocken (letztere werden am besten erkannt, wenn das akustische Signal von schmelzenden Schneeflocken untersucht wird, d.h. wenn die Prallplatte heizbar ist) erlaubt, so daß durch Akkumulation die Niederschlagsintensität über einen bestimmten Zeitraum ermittelt werden kann.

Vorzugsweise ist die Prallplatte mit Heizmitteln ausgestattet, die den Betrieb des Niederschlagsmessers auch im Winter zur Erfassung von Schneefällen erlauben.

Vorzugsweise ist die vom Niederschlag erreichbare Fläche der Prallplatte so klein, daß das Auftreffen eines einzigen Tropfens, Hagelkorns oder einer einzigen Schneeflocke auf die Prallplatte registriert werden kann. Das bedingt einen Durchmesser der Prallplatte zwischen 1 und 5 cm.

In Anbetracht der Tatsache, daß Frequenzanalysatoren heute bereits als spezielle programmierbare Halbleiterbaugruppen zur Verfügung stehen, die wesentlich schneller als ein programmierter Prozessor die Frequenzanalyse eines Signals durchführen, ist es günstig, eine solche Baugruppe separat vom Prozessor vorzusehen und den Prozessor nur mit den fertigen Analysedaten zu füttern. Aber natürlich ist es auch möglich, dem ohnehin für die Interpretation der Analysedaten notwendigen Prozessor auch durch geeignete Programmierung die Aufgabe des Frequenzanalysators zu übertragen.

Nachfolgend wird die Erfindung an Hand eines bevorzugten Ausführungsbeispiels mit Hilfe der Zeichnungen näher erläutert.
Figur 1 zeigt ein Blockschaltbild des elektrischen Teils des erfindungsgemäßen Niederschlagsmessers und
Figur 2 enthält Zeitdiagramme zweier Signale, die im akusto-elektrischen Wandler bei Auftreffen unterschiedlich großer Regentropfen auf die Prallplatte entstehen.

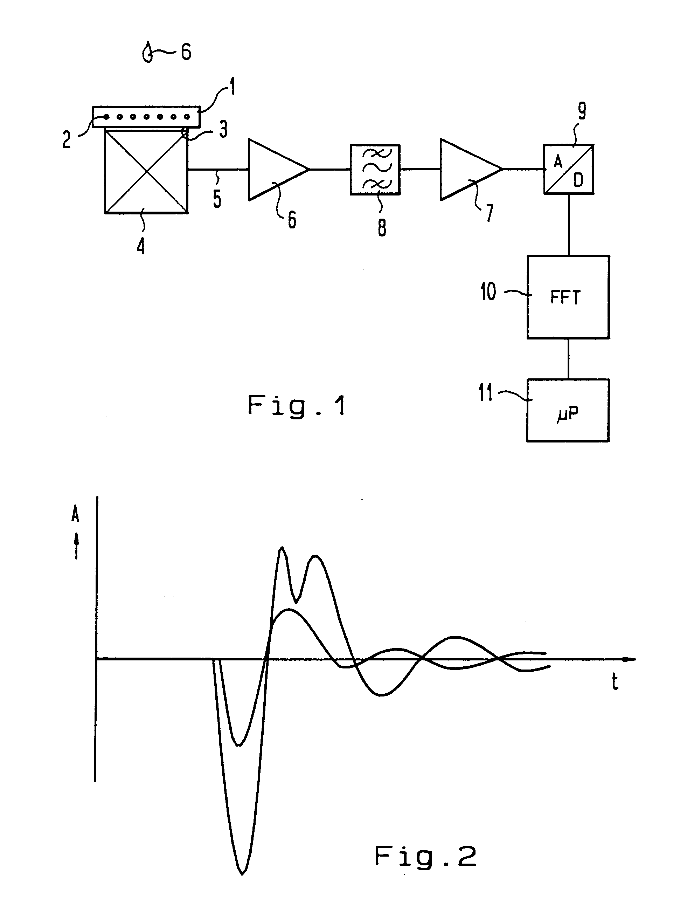

In Figur 1 ist schematisch eine Prallplatte 1 gezeigt, die mit Hilfe elektrischer Heizdrähte 2 und einer nicht dargestellten Heizstromquelle auf eine die Eisbildung verhindernde Temperatur gebracht werden kann. Die Platte 1 ist mit Hilfe einer Klebeschicht 3 auf einem piezoelektrischen Kristall befestigt, der auf einer Ausgangsleitung 5 ein elektrisches Signal liefert, wenn auf die Platte 1 ein Regentropfen 6 auftrifft. Zwei Beispiele für Signale auf der Leitung 5 sind in Figur 2 dargestellt, wobei das Signal geringerer Amplitude von einem Regentropfen eines Durchmessers von 1 mm und das Signal mit größerer Amplitude von einem Regentropfen eines Durchmessers 2 mm herrührt.

Das Signal wird in Breitbandverstärkern 6 und 7 auf einen für die Digitalisierung brauchbaren Pegel angehoben. Zwischen den beiden Verstärkern liegt ein Bandpaßfilter 8, das Frequenzbereiche unterhalb 150 Hz und oberhalb von 100 kHz unterdrückt.

Das verstärke und gefilterte Signal wird einem Analog-Digital-Konverter 9 zugeführt, der eine Folge diskreter Amplitudenwerte des Signals erzeugt und einem Frequenzanalysator 10 zuführt. Letzterer ist beispielsweise ein sogenannter FFT Prozessor (Fast Fourier Transform) und liefert in im Vergleich zur Dauer zwischen zwei auf die Platte 1 auftreffenden Tropfen kurzer Zeit eine digitale Angabe über das Frequenzspektrum des Wandlersignals. Aus dieser Angabe kann dann ein Prozessor 11 aufgrund von gespeicherten Vergleichswerten zwischen Regentropfen, Hagelkörnern und sogar Schneeflocken unterscheiden. Tatsächlich ergibt sich bei Hagel ein Frequenzmaximum zwischen 2 uznd 5 kHz, bei Regen zwischen 10 und 20 kHz und bei Schneeflocken ein Maximum oberhalb von 50 kHz.

Nun wird noch die Signalamplitude eines Signals, wie es in Figur 2 gezeigt ist, unter Berücksichtigung der Niederschlagsart (Regen, Hagel, Schneefall) ausgewertet, um daraus z.B. die Größe eines auf die Platte 1 gefallenen Regentropfens zu ermitteln. Aus der Anzahl und der Größe der auf die Platte 1 gefallenen Regentropfen in einer Zeiteinheit lassen sich im Prozessor 11 die Regenintensität und die gesamte Regenmenge errechnen.

Im Rahmen der Erfindung können auch andere akusto-elektrische Wandler Verwendung finden, etwa dynamische Mikrophone.

## Patentansprüche

1. Niederschlagsmesser mit einem akusto-elektrischer Wandler (4), der so angeordnet ist, daß einzelne Tropfen, Hagelkörner oder Schneeflocken beim Auftreffen auf eine dem Wandler zugeordnete Prallplatte (1) ein elektrisches Signal erzeugen, und mit einem Verstärker, der dieses Signal verstärkt, dadurch gekennzeichnet, daß das verstärkte Signal digitalisiert wird (9), worauf das digitalisierte Signal einem Frequenzanalysator (10) zugeführt wird, der das Frequenzspektrum des Signals ermittelt, das dann in einem programmierbaren Prozessor (11) interpretiert wird.

2. Niederschlagsmesser nach Anspruch 1, dadurch gekennzeichnet, daß die Prallplatte (1) mit Heizmitteln (2) ausgestattet ist.

3. Niederschlagsmesser nach einem der Ansprüche 1 oder 2, dadurch gekennzeichnet, daß die vom Niederschlag erreichbare Fläche der Prallplatte (1) einen Durchmesser zwischen 1 und 5 cm besitzt.

## Claims

1. A precipitation measuring device comprising an acousto-electrical converter (4) conceived to produce an electric signal in reply to individual droplets, hailstones or snow-flakes hitting an impact plate (1) which is associated to said converter, and comprising an amplifier for amplifying said signal, characterized in that the amplified signal is digitized (9) and then fed to a frequency analyzer (10) which elaborates the frequency spectrum of said signal, this spectrum then being interpreted in a programmable processor (11).

2. A device according to claim 1, characterized in that the impact plate (1) is provided with heater means (2).

3. A device according to one of claims 1 or 2, characterized in that the diameter of this impact plate (1) surface susceptible to be hit by the precipitation is between 1 and 5 cm.

## Revendications

1. Dispositif pour mesurer des précipitations, comprenant un convertisseur acousto-électrique (4), qui est arrangé pour produire un signal électrique lorsque des gouttes, grêlons ou des flocons de neige individuels tombent sur une plaque de rebondissement (1) associée au convertisseur, et comprenant un amplificateur servant à amplifier ce signal, caractérisé en ce que le signal amplifié est converti en numérique (9) puis appliqué à un analyseur de fréquence (10) qui évalue le spectre de ce signal, ce spectre étant alors interprété dans un processeur programmable (11).

2. Dispositif selon la revendication 1, caractérisé en ce que la plaque de rebondissement (1) est munie de moyens de chauffage (2).

3. Dispositif selon l'une des revendications 1 ou 2, caractérisé en ce que la surface de ladite plaque (1) susceptible d'être atteinte par la précipitation présente un diamètre entre 1 et 5 cm.
